# FASCICULE DE BREVET EUROPEEN

(11) **EP 0 600 769 B1**
(45) Date de publication et mention de la délivrance du brevet: **18.10.1995**
(21) Numéro de dépôt: 93402857.2
(22) Date de dépôt: 25.11.1993
(51) Int. Cl.: C14C 15/00, B05C 19/04

(54) **Dispositif de distribution d'un produit pulvérulent et son utilisation pour l'épandage de sel sur des peaux d'animaux**
Vorrichtung zum Streuen eines pulverförmigen Materials und deren Verwendung zur Streuung von Salz auf Tierhäuten
Device for spreading a powdery product and its use for spreading salt on animal skins

(30) Priorité: 02.12.1992 FR 9214508
(43) Date de publication de la demande: 08.06.1994
(73) Titulaire: COMPAGNIE DES SALINS DU MIDI ET DES SALINES DE L'EST, Société Anonyme dite, F-75008 Paris (FR)
(72) Inventeur: Deveau, Jacques, F-34280 La Grande Motte (FR); Martuchou, Michel, F-34970 Lattes (FR); Ordon, Francois, F-34400 St Jean de Vedas (FR)
(74) Mandataire: Jolly, Jean-Pierre

(56) Documents cités:
- EP-A- 0 451 076

## Description

La présente invention concerne un dispositif de distribution d'un produit pulvérulent. L'invention concerne également l'utilisation de ce dispositif pour l'épandage de sel sur des peaux d'animaux.

C'est à cette utilisation du dispositif que l'on se référera plus particulièrement ci-après, car il a été conçu plus spécialement en vue de cette application, mais il est entendu que l'invention n'est pas limitée à ce type d'utilisation.

On sait que, pour être transformées en cuir, les peaux fraîchement prélevées sur le corps des animaux doivent subir des opérations successives, longues et complexes.

L'une des premières manipulations à effectuer consiste à saler les peaux fraîches du côté de la chair et à les empiler à plat, pour les conserver en piles pendant une durée suffisante pour obtenir une déshydratation satisfaisante, tout en prévenant leur putréfaction sous l'effet des bactéries ou des microbes présents.

Le salage des peaux et leur stockage en pile doivent être effectués avec soin, car c'est de ces opérations que dépendent la bonne conservation des peaux et l'absence de défauts des cuirs préparés à partir de celles-ci.

Ces opérations sont habituellement effectuées dans des ateliers de petites dimensions et le salage est en général réalisé manuellement ce qui est une tâche fastidieuse.

La présente invention vise à automatiser cette opération, en proposant un dispositif de distribution de sel, qui se prête au salage en série des peaux, au cours de leur empilement.

L'invention vise également à proposer un dispositif de ce type peu volumineux, propre à équiper des ateliers de petites dimensions.

L'invention vise enfin à proposer un tel dispositif qui puisse être approvisionné facilement en sel.

A cet effet, l'invention a pour objet un dispositif pour la distribution de produits pulvérulents, notamment de sel, ce dispositif étant caractérisé en ce qu'il comprend :
- une structure porteuse ;
- deux rails parallèles, aptes à être déplacés verticalement par rapport à cette structure ;
- des moyens pour déplacer verticalement ces rails en concordance par rapport à la structure, depuis une position basse jusqu'à une position haute et inversement ;
- une trémie apte à être emplie du produit pulvérulent à distribuer, cette trémie reposant par un chariot à roues sur les rails et présentant à sa partie inférieure au moins un orifice de distribution ;
- des moyens pour imprimer au chariot portant la trémie un mouvement sur les rails dans un sens ou dans l'autre.

Dans ce dispositif, la trémie pourra donc occuper deux positions. Dans la position basse des rails, elle pourra être emplie du produit pulvérulent, à partir d'un conteneur amené au-dessus de la trémie par tout moyen approprié, par exemple à l'aide d'un chariot à fourches. Dans la position haute des rails, la trémie pourra être animée d'un mouvement de va-et-vient pour distribuer le produit pulvérulent, notamment pour épandre du sel sur des peaux d'animaux.

L'intérêt majeur de ce dispositif réside naturellement dans sa simplicité et dans son faible encombrement, puisqu'il n'est pas nécessaire d'utiliser des moyens complexes et volumineux pour emplir la trémie de distribution, celle-ci pouvant être amenée en position basse pour être emplie à partir d'un conteneur usuel du commerce, soulevé par un simple chariot à fourches.

On pourra utiliser tout moyen usuel de la technique pour soulever les rails supportant la trémie, par exemple des vérins. De préférence, dans une forme de réalisation simple et peu coûteuse de ce dispositif, particulièrement bien adaptée à de petits ateliers, on utilisera simplement un moteur supporté par la structure porteuse et entraînent les rails par l'intermédiaire de câbles passant sur un tambour d'entraînement et éventuellement des poulies de renvoi.

Le chariot supportant la trémie sera de préférence automoteur, c'est-à-dire qu'il sera équipé lui-même de moyens apte à entraîner certaines roues motrices dans un sens ou dans l'autre, sous l'effet d'une commande à distance.

Le dispositif conforme à l'invention est particulièrement bien adapté au salage de peaux fraîches côté chair, que l'on place successivement sur le trajet de la trémie, au-dessous de celle-ci, en les empilant.

Les dessins schématiques annexés illustrent une forme de mise en oeuvre de l'invention. Sur ces dessins :

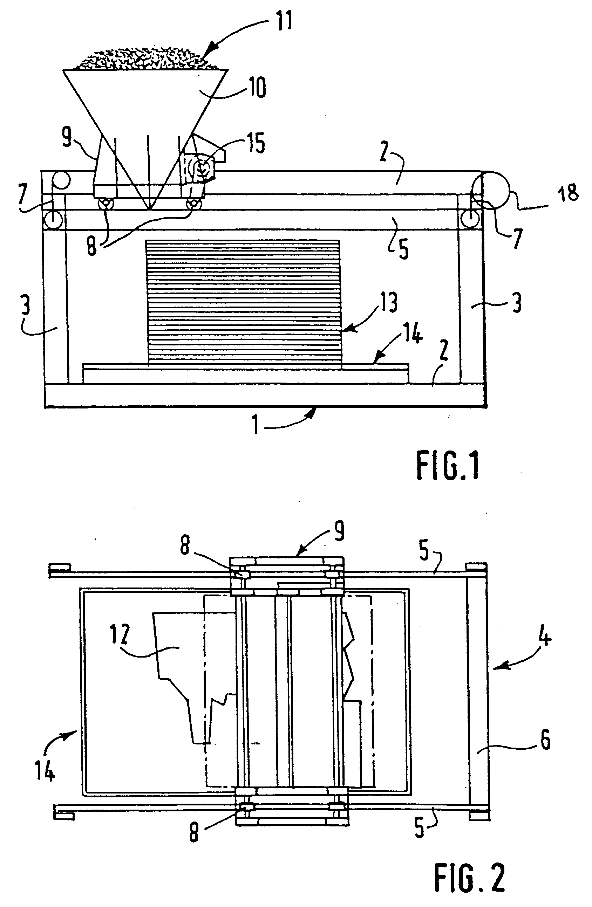

La figure 1 est une vue en élévation latérale du dispositif, avec la trémie en position d'utilisation ;
La figure 2 est une vue de dessus de la trémie reposant sur les rails du dispositif, en position d'épandage du produit qu'elle contient ;
La figure 3 est une vue partielle à plus grande échelle de la trémie reposant sur les rails du dispositif ;
La figure 4 est une vue analogue à la figure 1 illustrant le chargement de la trémie en position basse de celle-ci.

Le dispositif représenté comprend un bâti 1, constitué par exemple de poutres métalliques horizontales 2 et verticales 3 assemblées entre elles, qui sert d'ossature-support pour une structure 4, mobile verticalement par rapport au bâti 1.

La structure 4 comporte deux rails longitudinaux 5, réunis entre eux par une poutre 6.

Aux deux extrémités des rails 5 sont fixés des câbles 7, qui s'enroulent sur un tambour 18 entraîné par un moteur non représenté.

Sur les rails 5 reposent les roues 8 d'un chariot 9 supportant une trémie 10, qui contient le produit pulvérulent 11 à distribuer. Dans le cas présent, ce produit est du sel, que l'on désire épandre sur des peaux fraîches 12 d'animaux que l'on dispose successivement au sommet d'une pile 13 supportée par une plate-forme 14. Le chariot 9 comprend une moteur 15 entraînant les roues du chariot dans un sens ou dans l'autre, sous l'effet d'une commande à distance que commande l'opérateur.

La trémie 10 comporte à sa base des orifices de distribution dont l'ouverture et la fermeture sont également commandées à distance par l'opérateur.

Il est ainsi possible, après avoir déposé une peau 12 au sommet de la pile 13 avec la face côté chair tournée vers le haut, de déplacer le chariot 9 et la trémie 10 qu'il supporte, en ouvrant les orifices de cette trémie, de manière à distribuer du sel sur la peau 12 de façon parfaitement homogène. L'épandage du sel peut être effectué en déplaçant la trémie dans un sens, puis dans l'autre et ce mouvement ou ces mouvements peuvent être répétés, si nécessaire. Après quoi, on ferme les orifices de distribution du sel, on immobilise la trémie et l'on met en place une nouvelle peau fraîche au sommet de la pile, pour recommencer l'opération d'épandage du sel sur sa face côté chair tournée vers le haut.

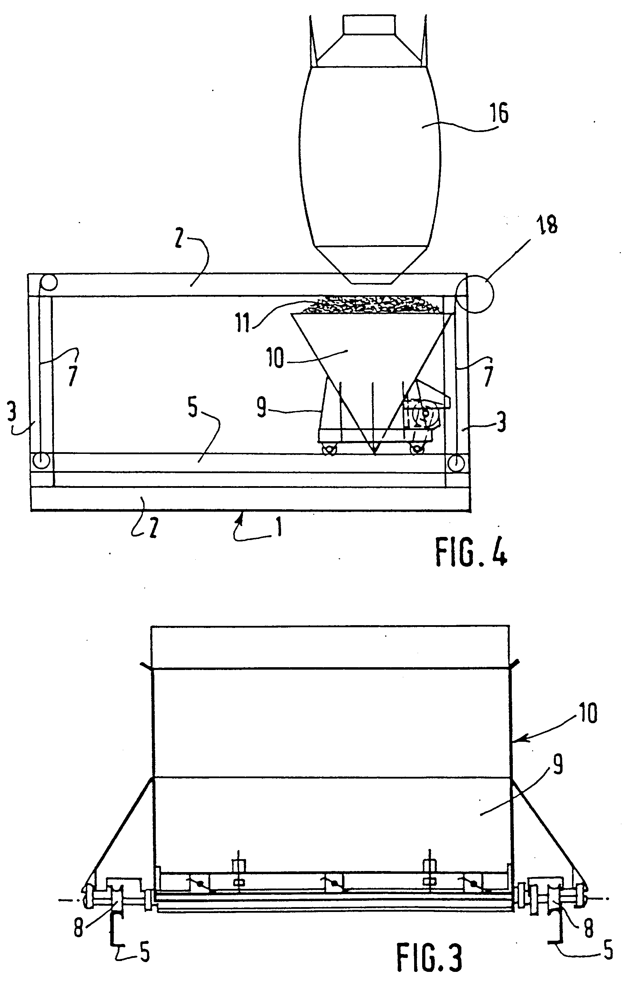

Lorsque la trémie est vide, après avoir évacué le cadre 14 supportant la pile 13 de peaux traitées, on abaisse la structure 4 des rails 5, en actionnant le tambour 18, pour amener cette structure au niveau du sol (position représentée sur la figure 4). Pour remplir la trémie, il suffit alors de soulever un conteneur 16 de sel du commerce, à l'aide, par exemple, d'un chariot à fourche, non représenté, et d'ouvrir ce conteneur pour évacuer son contenu dans la trémie.

Il suffit ensuite de ramener en position haute les rails 5, le chariot 9 et la trémie 10 qu'ils supportent pour pouvoir recommencer l'opération de salage d'un nouveau lot de peaux.

Ce dispositif est donc d'un grande simplicité de conception et d'utilisation et il convient tout particulièrement aux petits ateliers dans lesquels on effectue habituellement le salage des peaux.

## Revendications

1. Dispositif pour la distribution de produits pulvérulents, notamment de sel, ce dispositif étant caractérisé en ce qu'il comprend :
- une structure porteuse (1) ;
- deux rails parallèles (5), aptes à être déplacés verticalement par rapport à cette structure ;
- des moyens pour déplacer verticalement ces rails (5) en concordance par rapport à la structure (1), depuis une position basse jusqu'à une position haute et inversement ;
- une trémie (10) apte à être emplie du produit pulvérulent (11) à distribuer, cette trémie reposant par un chariot (9) à roues (8) sur les rails (5) et présentant à sa partie inférieure au moins un orifice de distribution ;
- des moyens (15) pour imprimer au chariot (9) portant la trémie (10) un mouvement sur les rails (5) dans un sens ou dans l'autre.

2. Dispositif selon la revendication 1, caractérisé en ce que les moyens pour déplacer verticalement les rails (5) par rapport à la structure porteuse (1) comprennent un tambour (18), entraîné en rotation par un moteur, et des câbles (7) attachés aux extrémités des rails (5) et aptes à s'enrouler sur le tambour (18).

3. Dispositif selon l'une des revendications 1 et 2, caractérisé en ce que les moyens pour imprimer au chariot (9) portant la trémie (10) un mouvement sur les rails (5) comprennent un moteur (15) porté par le chariot (9) et entraînant en rotation certaines des roues du chariot sous l'effet d'une commande à distance.

4. Utilisation d'un dispositif selon l'une des revendications 1 à 3, pour l'épandage de sel sur le côté chair de peaux d'animaux.

## Claims

1. Apparatus for the distribution of powder products, in particular salt, the apparatus being characterised in that it comprises:
- a support structure (1);
- two parallel rails (5) which are capable of being displaced vertically with respect to said structure;
- means for vertically displacing said rails (5) in concordant relationship with respect to the structure (1) fro a down position to an up position and vice-versa;
- a hopper (10) capable of being filled with the powder product (11) to be distributed, said hopper resting by bans of a carriage (9) with wheels (8) on the rails (5) and in its lower part having at least one distribution orifice; and
- means (15) for imparting to the carriage (9) carrying the hopper (10) a movement in one direction or the other on the rails (5).

2. Apparatus according to claim 1 characterised in that the means for vertically displacing the rails (5) with respect to the support structure (1) comprise a drum (18) which is driven in rotation by a motor and cables ( 7) which are attached to the ends of the rails (5) and which are capable of being wound on to the drum (18).

3. Apparatus according to one of claims 1 and 2 characterised in that the caps for imparting a movement on the rails (5) to the carriage (9) carrying the hopper (10) comprise a motor (15) carried by the carriage (9) and driving in rotation some of the wheels of the carriage under the effect of a remote control.

4. Use of an apparatus according to one of claims 1 to 3 for spreading salt on the flesh side of animal hides and skins.

## Patentansprüche

1. Vorrichtung zum Verteilen von pulverförmigen Produkten, insbesondere Salz, dadurch gekennzeichnet, daß sie besteht aus:
- einer tragenden Struktur (1);
- zwei parallelen Schienen (5), die in bezug auf diese Struktur senkrecht bewegt werden können;
- Mitteln zum senkrechten gleichzeitigen Bewegen dieser Schienen (5) in bezug auf die Struktur (1) von einer unteren Stellung aus bis in eine obere Stellung und umgekehrt;
- einem Trichter (10), der mit dem zu verteilenden pulverförmigen Produkt (11) gefüllt werden kann, wobei dieser Trichter auf einem Wagen (9) mit Rädern (8) auf den Schienen (5) ruht und in seinem unteren Bereich mindestens eine Öffnung zum Verteilen aufweist;
- aus Mitteln (15), um den Wagen (9), der den Trichter (10) trägt, auf den Schienen (5) in die eine oder andere Richtung zu bewegen.

2. Vorrichtung nach Anspruch 1, dadurch gekennzeichnet, daß die Mittel zum senkrechten Bewegen der Schienen (5) in bezug auf die tragende Struktur (1) eine Trommel (18) enthalten, die drehbar durch einen Motor angetrieben wird, und Seile (7), die an den Enden der Schienen (5) befestigt sind und auf der Trommel (18) aufrollen können.

3. Vorrichtung nach einem der Ansprüche 1 und 2, dadurch gekennzeichnet, daß die Mittel zum Bewegen des Wagens (9), der den Trichter (10) trägt, auf den Schienen (5) einen Motor (15) enthalten, der vom Wagen (9) getragen wird und bestimmte Räder des Wagens unter Einwirkung einer Fernbedienung drehbar antreibt.

4. Die Anwendung einer Vorrichtung nach einem der Ansprüche 1 bis 3 zum Streuen von Salz auf der Innenseite von Tierhäuten.
